Europäisches Patentamt

European Patent Office

Office européen des brevets

(11) Publication number: **0 322 796 B1**

## EUROPEAN PATENT SPECIFICATION

(45) Date of publication of patent specification: **30.09.92**   (51) Int. Cl.⁵: **C01C 3/02**

(21) Application number: **88121594.1**

(22) Date of filing: **23.12.88**

(54) Production method of hydrocyanic acid.

(30) Priority: **25.12.87 JP 326856/87**

(43) Date of publication of application:
**05.07.89 Bulletin 89/27**

(45) Publication of the grant of the patent:
**30.09.92 Bulletin 92/40**

(84) Designated Contracting States:
**DE GB NL**

(56) References cited:
**DE-B- 1 267 676**
**US-A- 2 006 981**
**US-A- 4 485 079**
**US-A- 4 511 548**

**PATENT ABSTRACTS OF JAPAN, vol. 7, no.
263 (C-196)[1408], 24th November 1983.**

**PATENT ABSTRACTS OF JAPAN, vol. 5, no.
102 (C-61)[774], 2nd July 1981.**

**PATENT ABSTRACTS OF JAPAN, vol. 5, no.
85 (C-57)[757], 3rd June 1981.**

(73) Proprietor: **NITTO CHEMICAL INDUSTRY CO.,
LTD.**
**No. 5-1, Marunouchi 1-chome Chiyoda-ku
Tokyo(JP)**

(72) Inventor: **Sasaki, Yutaka**
**5-7, Yukinoshita-4-chome
Kamakura-shi(JP)**
Inventor: **Utsumi, Hiroshi**
**2425-18, Nakatacho
Izumi-ku Yokohama(JP)**
Inventor: **Noda, Mikio**
**27-1, Shiba-3-chome
Minato-ku Tokyo(JP)**

(74) Representative: **Hansen, Bernd, Dr.rer.nat. et
al**
**Hoffmann, Eitle & Partner Patentanwälte Ar-
abellastrasse 4 Postfach 81 04 20
W-8000 München 81(DE)**

**Description**

This invention relates to a production method for hydrocyanic acid, more specifically, to a production method for hydrocyanic acid through a gas phase catalytic ammoxidation reaction of methyl formate.

Hydrocyanic acid, up until recently, has been produced by such methods as decomposition of formamide and ammoxidation of methane. In recent years, it has been most commonly obtained as a by-product of acrylonitrile production by ammoxidation of propylene. However, with the recent advancement in catalyst performance, the available amount of hydrocyanic acid produced as a by-product has become less and difficulties have often been encountered in securing large quantities for use as a starting material for methyl methacrylate production by acetone cyanohydrin method. Transportation of hydrocyanic acid is very dangerous because of its toxicity.

Therefore, it must only be used in a process where it is consumed as soon as it is produced.

U.S.-A 2,006,981 describes a process for the production of hydrocyanic acid in which methyl formate is used as a starting material and metal oxides like the rare earth metals, lanthanum, thorium, aluminium, iron, tin, zinc, cadmium, bismuth and uranium are mentioned as catalysts, particularly metal oxide catalysts. The process disclosed in said U.S. patent is carried out at a temperature of 500°C to 1300°C, preferably 700°C to 1200°C and in the working examples, the temperatures are 820°C or more.

It is the object of the present invention to provide a new process for the production of hydrocyanic acid starting with methyl formate, ammonia and oxygen wherein lower reaction temperatures can be used.

This object is accomplished by the present invention which is based on the discovery that hydrocyanic acid is produced through a gas phase ammoxidation of methyl formate in the presence of the specific metal oxide catalyst described in claim 1

DETAILED DESCRIPTION OF PREFERRED EMBODIMENT

The characteristics of the production method for hydrocyanic acid according to this invention lie in that methyl formate, ammonia and oxygen are reacted in a gas phase at high-temperature in the presence of a metal oxide catalyst.

The method used in this invention involves supplying methyl formate, ammonia and oxygen to a reactor filled with a catalyst. The reaction, can be carried out either in a fixed bed, or a fluidized bed reactor.

The methyl formate used as the raw material in this invention does not necessarily have to be in its pure state, and crude methyl formate containing some impurities can also be used. Industrial grade of methyl formate can be employed as it is.

Methyl formate is directly produced from methanol, and also obtained as a by-product in the production of tertiary butyl amine according to the Ritter reaction.

For economic reasons, air is most suitable for use as the source of oxygen.

In this invention, the proportion of raw materials supplied to the reactor can be changed over a wide range. The molar ratio for oxygen/methyl formate ranges between 0.5 - 30, preferably between 0.9 - 15. The molar ratio for ammonia/methyl formate may be 0.7 - 5, preferably between 1.0 - 3.5. Furthermore, it is possible to introduce such substances as steam and nitrogen as inert diluents.

The reaction of this invention can be carried out under the coexistence of organic compounds selected from the group consisting of methanol, propylene, isobutene, and tertiary butanol. Under such circumstances, it is necessary to adjust the concentration of ammonia and oxygen considering the concentration of both these compounds and the methyl formate. Furthermore, it is preferable to change the supling method or feed materials, taking into consideration the reaction rate of one against the other.

The molar ratio of the compound mentioned above to methyl formate can be chosen in a wider range. That is, the ratio is usually on the order of 1 : 0.05 to 1 : 10, preferably 1 : 0.1 to 1 : 0.5. The molar ratio of the organic compounds to ammonia may be in the range of 1 : 0.81 to 1 : 3, preferably 1 : 1 to 1 : 1.5, provided that the total amount of the organic compounds, i.e. the sum of said compounds and methyl formate is taken as 1. Oxygen is continually supplied to a reactor so as to keep the oxygen content at the reactor outlet above zero.

Reaction temperature is usually in the range of from 300°C to 600°C. The contact time is between 0.1 seconds and 30 seconds, and the reaction pressure is between atmospheric pressure and 3 kg/cm$^2$ G.

In carrying out the method of the present invention, the catalyst used is a metal oxide catalyst which contains antimony and at least one element selected from the group consisting of iron, cobalt, nickel, manganese, zinc, tin, and uranium. The above mentioned catalysts, in order to suppress the formation of carbon monoxide or carbon dioxide, can be used with such additional elements as phosphorus, boron, tellurium and bismuth. It is also possible to add such elements as lithium, sodium, potassium, rubidium,

EP 0 322 796 B1

cesium, magnesium, calcium, barium, strontium, lanthanum, cerium, zirconium, niobium, tantalum, silver, copper, aluminum, tin, molybdenum, tungsten, and vanadium to control the physical properties and activity of the catalysts.

More specifically, the catalysts used in this invention are selected from among the catalyst shown by the following empirical formula (1). These can be used with or without a carrier. As a carrier is used silica, silica-alumina, alumina, silica-titania, titania, or zirconia.

(1)  $Sb_aA_bB_cC_dO_x$

(In this formula, "A" represents at least one element selected from the group consisting of Fe, Co, Ni, Mn, Zn, Sn, and U; "B" represents at least one element selected from the group consisting of P, B, and Te; "C" represents at least one element selected from the group consisting of Li, Na, K, Rb, Cs, Be, Mg, Ca, Sr, Ba, Sc, Y, a lanthanoid, Th, Ti, Zr, Hf, V, Nb, Ta, Cr, Mo, W, Re, Ru, Rh, Pd, Os, Ir, Pt, Cu, Ag, Au, Cd, Al, Ga, In, Tl, Si, Ge, Pb, As, Bi, S, and Se;

"a" is 1, "b" is a number of from 0.02 to 6, "c" is a number of from 0 to 4, "d" is a number of from 0 to 5.6, and "x" represents the number taken to satisfy valence requirements of other existing elements.

The shape and configuration of the catalysts are left at option, but when the reaction is carried out in a fixed bed reactor, catalysts should be pellets, or small balls of several millimeters in size. When carried out in a fluidized bed reactor, catalyst particles are in the range of 5 - 200 $\mu$m in diameter.

In this invention, starting materials for the catalyst can be selected from oxides, hydroxides, chlorides, nitrates, and organic acid salts of each component element.

A catalyst to be used in this invention can be produced in a conventional manner. A catalyst is made by combining the above-mentioned starting materials and, as the need arises, it is neutralized, precipitated, washed, dried, and calcined. Desired activity is achieved by calcining it for 0.5 - 50 hours at from 300 to 1,000 °C as the final step.

Hydrocyanic acid is readily obtained with less by-products or impurities through the present method than the conventional ammoxidation of various hydrocarbons such as propylene, isobutene, toluene, or xylene. Therefore, it is easier to refine, or in certain cases, it can be used without any refining. Furthermore, the method proposed by this invention, when compared to previously employed methods such as ammoxidation of methane over platinum catalysts, offers more benefits in terms of reduction in construction cost, equipment cost and operating cost owing to less expensive catalysts and lower reaction temperature.

The present invention will be described in greater detail by reference to the following examples.

Conversion of methyl formate, yield of hydrocyanic acid and its selectivity are defined in the following manner.

Conversion of Methyl Formate (%)

$$= \frac{\text{Weight of Carbon in Methyl Formate Reacted}}{\text{Weight of Carbon in Methyl Formate Supplied}} \times 100$$

Yield of Hydrocyanic Acid (%)

$$= \frac{\text{Weight of Carbon in Hydrocyanic Acid Produced}}{\text{Weight of Carbon in Methyl Formate Supplied}} \times 100$$

Selectivity of Hydrocyanic Acid (%)

3

$$= \frac{\text{Weight of Carbon in Hydrocyanic Acid Produced}}{\text{Weight of Carbon in Methyl Formate Reacted}} \times 100$$

Contact time is defined as follows.

Contact time [sec]

$$= \frac{\text{Volume of Catalyst Packed } [\ell]}{\text{Flow Rate of Supplied Gas } [\ell/\text{sec}]}$$

Catalytic activity was tested as follows.

METHOD OF CATALYTIC ACTIVITY TEST

The catalyst was placed in a U-shaped reactor with inside diameter of 16 mm to satisfy desired contact time, and then heated in a fused salt bath comprised equal parts of sodium nitrite and potassium nitrate. Next, a gas of a following composition was supplied into the reactor at the rate of 33 liters (NTP) per hour. Reaction pressure was atmospheric.

| $O_2$ (supplied by air)/methyl formate | - 2.0 (molar ratio) |
|---|---|
| Ammonia/methyl formate | - 2.2 (molar ratio) |

The concentration of methyl formate in the supplied gas was 7.9% by volume.

The activity test was conducted, varying reaction temperature and contact time to reach the maximum yield of hydrocyanic acid. Hydrocyanic acid was analyzed through titration, and methyl formate was analyzed through chromatography.

The catalyst of each example was prepared in the following manner. The activity test results are shown in Table 1.

Example 1

The catalyst with the experical formula of $Sb_{10}Fe_5O_{17.5}$ was prepared in the following manner.

209 g of iron nitrate was dissolved in 500 ml of water (I).

151 g of antimony trioxide was added to (I) and mixed with it. The slurry was then heated to dryness while stirring. The dried cake was calcined at 200°C for 4 hours and then at 400°C for 4 hours. The resulting cake was kneaded with added water and formed into cylindrical pellets of 2 mm x 2 mm⌀. After drying, it was again calcined at 850°C for 3 hours.

Examples 2 - 7

Catalyst with the composition listed in Table 1 were prepared in the same manner as in Example 1.

Table 1

| Catalyst composition (atomic ratio) | Calcination condition (°C/hrs) | Reaction temperature (°C) | Contact time (sec.) | Conversion of methyl formate (%) | Yield of hydrocyanic acid (%) |
|---|---|---|---|---|---|
| Example | | | | | |
| 1 $Sb_{10}Fe_5O_{17.5}$ | 850/3 | 390 | 1.5 | 95.2 | 35.5 |
| 2 $Sb_{10}U_1Ni_6O_{18.7}$ | 900/3 | 400 | 1.3 | 100.0 | 37.6 |
| 3 $Sb_{10}Zn_3Co_2Sn_{10}O_{55.0}$ | 950/8 | 390 | 1.3 | 97.4 | 34.0 |
| 4 $Sb_{10}Fe_6Cu_1W_{0.3}Te_{0.8}O_{22.5}$ | 800/3 | 380 | 1.3 | 99.3 | 48.5 |
| 5 $Sb_{10}Fe_2Mn_{0.5}V_1B_1O_{17.5}$ | 750/3 | 370 | 1.5 | 99.8 | 53.2 |
| 6 $Sb_{10}Fe_7Mg_1Mo_{0.5}Te_1K_{0.1}O_{25.05}$ | 750/3 | 380 | 1.5 | 98.1 | 50.7 |

Table 1 (cont'd)

| 7 | $Mo_{10}Bi_1Fe_{1.5}Sb_2Cs_{0.2}O_{35.85}$ | 550/3 | 380 | 1.3 | 98.5 | 48.1 |
|---|---|---|---|---|---|---|

Example 8

A U-shaped reactor with an inside diameter of 16 mm was filled with the same catalyst as used in Example 5, so that it conformed to the prescribed contact time.

A gas mixture of methanol, ammonia, and air with a molar ratio of 1 : 1.3 : 23.0 was passed over the catalyst. The reaction was carried out at 420°C and at a contact time of 1.5 sec. The methanol conversion was 98.2% and hydrocyanic acid yield was 81.0%.

Next, a gas mixture of methanol, methyl formate, ammonia and air with a molar ratio of 1 : 0.1 : 1.3 : 23.0, was passed under the same conditions as in the above case in which methyl formate was not supplied. The methanol conversion was 97.3% and hydrocyanic acid yield was 85.5%. The hydrocyanic acid yield clearly increased compared to the case that methyl formate was not supplied.

The methanol conversion and the hydrocyanic acid yield are here defined as follows:

Methanol Conversion (%)

$$= \frac{\text{Weight of Carbon in Methanol Reacted}}{\text{Weight of Carbon in Methanol Supplied}} \times 100$$

Hydrocyanic Acid Yield (%)

$$= \frac{\text{Weight of Carbon in Hydrocyanic Acid Produced}}{\text{Weight of Carbon in Methanol Supplied}} \times 100$$

Example 9

A catalyst with empirical formula
$Mo_{12}Bi_6Sb_{10}Ni_6P_1K_1O_{61.0}(SiO_2)_{70}$ was prepared as follows:

To 715.4 g of silica sol ($SiO_2$. 20 wt.%) was added 3.9 g of phosphoric acid (containing 85 wt.%) to give (I).

72.0 g of ammonium paramolybdenate was dissolved in 300 ml of distilled water, and then added to (I) to give (II).

53.9 g of nickel nitrate was added and mixed to give (III).

3.5 g of potassium nitrate was added to (III) to give (IV).

Five milliliters of nitric acid (63 wt.%) was mixed with 20 ml of distilled water into which 99.0 g of bismuth nitrate was dissolved. This mixture was added to (IV) to give (V).

Finally, 49.7 g of antimony trioxide was added. The resulting slurry was mixed well and heated to dryness. The dried product was calcined at 200°C for 4 hrs and then at 400°C for 4 hrs. After being kneaded with added water, it was formed into cylindrical pellets of 2 mm x 2 mm$\phi$. After drying, it was finally calcined at 600°C for 4 hours.

A U-shaped reactor with an inside diameter of 16 mm was filled with this catalyst, so that it conformed to the prescribed contact time.

A gas mixture of isobutene, ammonia, water vapor and air with a molar ratio of 1 : 1.5 : 1 : 11 was passed over the catalyst at 410°C. The contact time was 2 sec. The isobutene conversion was 97.3%, the methacrylonitrile yield was 77.8% and the hydrocyanic acid yield was 3.2%.

Next, a gas mixture of isobutene, methyl formate, ammonia, water vapor and air with a molar ratio of 1 : 0.2 : 1.5 : 1 : 11 was passed through under the same conditions as in the above case where methyl formate was not supplied.

Isobutene conversion was 96.0%, the methacrylonitrile yield was 77.5%, and the hydrocyanic acid yield was 4.5%. The hydrocyanic acid yield clearly increased compared to the case wherein methyl formate was not supplied.

The isobutene conversion, the methacrylonitrile yield, and the hydrocyanic acid yield are defined as follows:

Isobutene conversion (%)

$$= \frac{\text{Weight of Carbon in Isobutene Reacted}}{\text{Weight of Carbon in Isobutene Supplied}} \times 100$$

Methacrylonitrile Yield (%)

$$= \frac{\text{Weight of Carbon in Methacrylonitrile Produced}}{\text{Weight of Carbon in Isobutene Supplied}} \times 100$$

Hydrocyanic Acid Yield (%)

$$= \frac{\text{Weight of Carbon in Hydrocyanic Acid Produced}}{\text{Weight of Carbon in Isobutene Supplied}} \times 100$$

Example 10

A catalyst with empirical formula
$Fe_{10}Sb_{25}W_{0.25}Te_{0.5}O_{66.8}$ $(SiO_2)_{30}$ was prepared as follows:

To 225 ml of hot nitric acid (63 wt.%), 60.9 g of metallic antimony powder (100 mesh or less) was added little by little. After all the antimony had been added and the dark gas stopped evolving, the mixture was allowed to stand at an ambient temperature for 16 hours. Excess nitric acid was then removed and the precipitate was washed three times with 100 ml of water to give (I).

To a liquid made up of 100 ml of water and 81 ml of nitric acid (63 wt.%), 11.2 g of electrolytic iron powder was added little by little and completely dissolved to give (II).

To a solution of 1.3 g of ammonium paratungstenate dissolved in 50 ml of water, 2.3 g of telluric acid $H_6TeO_6$ was added to give (III).

One-hundred eighty grams of silica sol ($SiO_2$ 20 wt.%) were weight out (IV).

Solutions (II) and (IV) were mixed together and then the mixture was added to (III). The resulting slurry was then mixed with (I), and while stirring vigorously, aqueous ammonia (28%) was added little by little until the pH of the slurry became around 2. While stirring, the slurry was heated to dryness. The dried product was calcined at 200°C for 2 hours and then at 400°C for 2 hours. After being kneaded with added water, it was formed into a cylindrical pellets of 2 mm x 2 mmØ. After drying, it was calcined at 900°C for 2 hours.

A U-shaped reactor with an inside diameter of 16 mm was filled with this catalyst, so that it conformed to the prescribed contact time.

A gas mixture of propylene, ammonia and air with a molar ratio of 1 : 1.2 : 10.5 was passed over the catalyst at 440°C. The contact time was 5 seconds. The propylene conversion was 93.3%, the acrylonitrile yield was 77.4%, and the hydrocyanic acid yield was 4.1%.

Next, while the above reaction was in progress, a gas mixture of methyl formate, ammonia and air in a molar ratio of 1 : 1 : 5 was introduced from the methyl formate inlet of the catalyst bed, whereby the molar ratio of methyl formate to propylene was kept at 0.2. The distance between the methyl formate inlet and the top of catalyst bed was equal to half of the total length of the catalyst bed.

As a result, the propylene conversion was 94.0%, the acrylonitrile yield was 78.1%, and the hydrocyanic acid yield was 6.7%. The hydrocyanic acid yield clearly increased compared to the case wherein methyl formate was not supplied.

Propylene conversion, acrylonitrile yield, and hydrocyanic acid yield are defined as follows:

Propylene Conversion (%)

EP 0 322 796 B1

$$= \frac{\text{Weight of Carbon in Propylene Reacted}}{\text{Weight of Carbon in Propylene Supplied}} \times 100$$

Acrylonitrile Yield (%)

$$= \frac{\text{Weight of Carbon in Acrylonitrile Produced}}{\text{Weight of Carbon in Propylene Supplied}} \times 100$$

Hydrocyanic Acid Yield (%)

$$= \frac{\text{Weight of Carbon in Hydrocyanic Acid Produced}}{\text{Weight of Carbon in Propylene Supplied}} \times 100$$

## Claims

1. A production method of hydrocyanic acid characterized in that methyl formate is reacted with ammonia and oxygen in gas phase at a high temperature in the presence of a metal oxide catalyst of Formula (1)

(1)    $Sb_aA_bB_cC_dO_x$

wherein "A" represents at least one element selected from the group consisting of Fe, Co, Ni, Mn, Zn, Sn, and U; "B" represents at least one element selected from the group consisting of P, B, and Te; "C" represents at least one element selected from the group consisting of Li, Na, K, Rb, Cs, Be, Mg, Ca, Sr, Ba, Sc, Y, lanthanoids, Th, Ti, Zr, Hf, V, Nb, Ta, Cr, Mo, W, Re, Ru, Rh, Pd, Os, Ir, Pt, Cu, Ag, Au, Cd, Al, Ga, In, Tl, Si, Ge, Pb, As, Bi, S, and Se; "a" is 1, "b" is a number of from 0.02 to 6, "c" is a number of from 0 to 4, "d" is a number of from 0 to 5.6, and "x" represents the number taken to satisfy valence requirements of other existing elements.

## Patentansprüche

1. Verfahren zur Herstellung von Blausäure, dadurch **gekennzeichnet,** dass Methylformiat mit Ammoniak und Sauerstoff in der Gasphase bei einer hohen Temperatur in Anwesenheit eines Metalloxid-Katalysators der Formel (1) umgesetzt wird

$Sb_aA_bB_cC_dO_x$      (1)

wobei "A" mindestens ein Element aus der Gruppe aus Fe, Co, Ni, Mn, Zn, Sn und U darstellt; "B" mindestens ein Element aus der Gruppe aus P, B und Te darstellt; "C" mindestens ein Element aus der Gruppe aus Li, Na, K, Rb, Cs, Be, Mg, Ca, Sr, Ba, Sc, Y, Lanthanoiden, Th, Ti, Zr, Hf, V, Nb, Ta, Cr, Mo, W, Re, Ru, Rh, Pd, Os, Ir, Pt, Cu, Ag, Au, Cd, Al, Ga, In, Tl, Si, Ge, Pb, As, Bi, S und Se darstellt; "a" 1 ist; "b" eine Zahl von 0,02 bis 6 ist; "c" eine Zahl von 0 bis 4 ist; "d" eine Zahl von 0 bis 5,6 ist; und "x" die Zahl darstellt, die genommen wird, um den Valenzanforderungen der anderen vorhandenen Elemente zu genügen.

## Revendications

1. Procédé pour la fabrication d'acide cyanhydrique, caractérisé en ce que du formiate de méthyle est mis à réagir avec de l'ammoniac et de l'oxygène en phase gazeuse à une température élevée en présence d'un catalyseur en oxyde métallique répondant à la formule (1)

(1) $Sb_aA_bB_cC_dO_x$

dans laquelle "A" représente au moins un élément choisi dans le groupe constitué de : Fe, Co, Ni, Mn, Zn, Sn, et U; "B" représente au moins un élément choisi dans le groupe constitué de : P, B et Te; "C" représente au moins un élément choisi dans le groupe constitué de:Li, Na, K, Rb, Cs, Be, Mg, Ca, Sr, Ba, Sc, Y, des lanthanides, Th, Ti, Zr, Hf, V, Nb, Ta, Cr, Mo, W, Re, Ru, Rh, Pd, Os, Ir, Pt, Cu, Ag, Au, Cd, Al, Ga, In, Tl, Si, Ge, Pb, As, Bi, S et Se; "a" est égal à 1, "b" est un nombre compris entre 0,02 et 6, "c" est un nombre compris entre 0 et 4, "d" est un nombre compris entre 0 et 5,6, et "x" représente le nombre pris pour satisfaire les conditions de valence des autres éléments existants.